# EUROPEAN PATENT APPLICATION

(11) **EP 0 786 414 A1**
(43) Date of publication of application: **30.07.1997**
(21) Application number: 97101371.9
(22) Date of filing: 29.01.1997
(51) Int. Cl.: B65D 23/08, B65D 77/04, B65D 1/02

(54) **Compound container**

(30) Priority: 29.01.1996 JP 12419/96; 29.08.1996 JP 228718/96; 29.08.1996 JP 228719/96; 22.08.1996 JP 221300/96
(71) Applicant: Toppan Printing Co., Ltd., Taito-ku Tokyo (JP)
(72) Inventor: Kashima, Hiroto, Taito-ku, Tokyo (JP); Seki, Takekuni, Taito-ku, Tokyo (JP); Nakamura, Keiko, Taito-ku, Tokyo (JP); Iwasaki, Terutaka, Taito-ku, Tokyo (JP); Kawasaki, Hiroshi, Taito-ku, Tokyo (JP); Fukushima, Hideo, Taito-ku, Tokyo (JP); Sada, Jun, Taito-ku, Tokyo (JP); Kakumura, Toshiaki, Taito-ku, Tokyo (JP); Suzuta, Masayoshi, Taito-ku, Tokyo (JP)
(74) Representative: Chivarov, Gueorgui, Dr. Dipl.Ing.

(57) **Abstract**

The compound container of the present invention is a compound container for accomodating liquids or powders, etc., which is preferably made from an outer container (20) made of paper or a sheet whose main constituent element is paper, and an inner container (10) preferably made of plastic which is laminated inside said outer container (20) as an integral part of said outer container (20). The aforementioned inner container (10) has an opening portion (12), a shoulder part (14), a sleeve-form trunk part (16) and a bottom part (18), and connecting walls (17) which form obtuse angles with respect to the trunk part (16) and bottom part (18) are formed on the peripheral portions of the bottom part (18). The paper outer container (20) which covers substantially the entire surface of the trunk part (16) of the inner container (10) is integrated with the inner container (10) on the outside surface side of said inner container (10) by means of a thermosetting adhesive or hot-melt adhesive. This integration is accomplished by setting the outer container (20) inside a metal mold (30) using for molding, and stretch-blow-molding the inner container (10) from a preform inside said outer container (20). Alternatively, the connecting walls (17) may be curved so that they make a rounded connection between the trunk (16) and bottom parts (18).

## Description

The present invention concerns a compound container for accommodating liquids or powders, etc. The compound container may preferably be formed from an outer container made of paper or a sheet whose main constituent element is paper, and an inner container which is installed inside said outer container as an integral part of said outer container.

Conventionally, containers such as metal cans or bottles made of glass or plastic, etc., or containers formed from composite materials in which a plastic layer which is used to provide water resistance, etc. is coated if necessary on a relatively rigid paper (as in milk cartons), etc., have been used as containers for accommodating liquids such as various types of beverages (e.g., mineral water, sparkling water, milk, fruit juice and alcoholic beverages such as sake (rice wine), liquors and wines, etc.), condiments, oils, toiletry products such as liquid detergents, etc., or liquid drugs, etc., and powders such as powdered detergents, etc.

These containers have respective advantages and disadvantages; in recent years, compound containers have been proposed which combine the advantages of these various types of containers.

Such compound containers consist of an outer container made of paper or a sheet whose main constituent element is paper, and an inner container which is installed inside said outer container as an integral part of said outer container. The outer container generally has a shape with a sleeve-form trunk part, and is responsible for the shape retainability, self-standing properties and buckling strength, (i.e. the ability of the container to withstand deformation in cases where a load is applied to the container in the downward direction from above), etc., of the container. Furthermore, the inner container is formed so that the contents such as liquids, etc., can be accommodated; this inner container is responsible for the liquid-retaining functioning of the container. The inner container is ordinarily manufactured by blow molding a plastic material, and has a reclosable opening portion.

The abovementioned outer container and inner container may be joined by fitting or bonding after being separately formed; alternatively, a method is also known in which the formation of the inner container and the integration of the inner container with the outer container are accomplished simultaneously by a method in which the outer container is set inside a metal mold, and the inner container is formed inside said metal mold. For example, compound containers formed by the two methods mentioned above are described in EP 0 700 837 A2.

In particular, compared to compound containers manufactured by the former method, compound containers manufactured by the latter method require fewer individual manufacturing processes, and are therefore more economical, since the formation of the inner container and the integration of the inner container with the outer container are accomplished simultaneously. Furthermore, since the inner container can be made thinner, the amount of plastic required is reduced. Accordingly, petroleum resources can be conserved, and pollution of the environment when the compound container is incinerated or discarded in the case of disposal can be reduced. Thus, containers manufactured by such a method are desirable.

However, it has been found that the following problem arises in cases where the amount of plastic used in the inner container is thus reduced, if the container is formed in the commonly used bottle form: i.e., the inner container is formed by subjecting a preparatory molding known as a preform to a blow molding process; in such cases, the thickness of the wall in the peripheral part of the bottom of the container on the opposite side from the opening portion of the container tends to become thin compared to other parts of the container. Furthermore, as the amount of plastic used is reduced, the thickness of the thin-wall areas also becomes thinner, so that the container ultimately becomes unable to withstand practical use. Concrete problem points include the generation of pinholes during molding, and damage to the inner container when the compound container is dropped while packed with content.

Accordingly, the object of the present invention is to provide a compound container consisting of the abovementioned outer container and inner container, in which the abovementioned problems of pin-hole generation and damage in the case of dropping do not occur.

The present invention, which is used in order to achieve the abovementioned object, is characterized by the fact that in a compound container which is obtained by a method in which an outer container is set inside a metal mold and an inner container is formed inside said metal mold, at least portions of the connecting parts between the trunk part and the bottom of the inner container are connected via connecting walls which form respective obtuse angles relative to the trunk part and bottom part.

Figure 1 is a partially cut-away perspective view which illustrates a typical compound container constructed according to the present invention.

Figure 2 is a partial sectional view along line X-X in Figure 1.

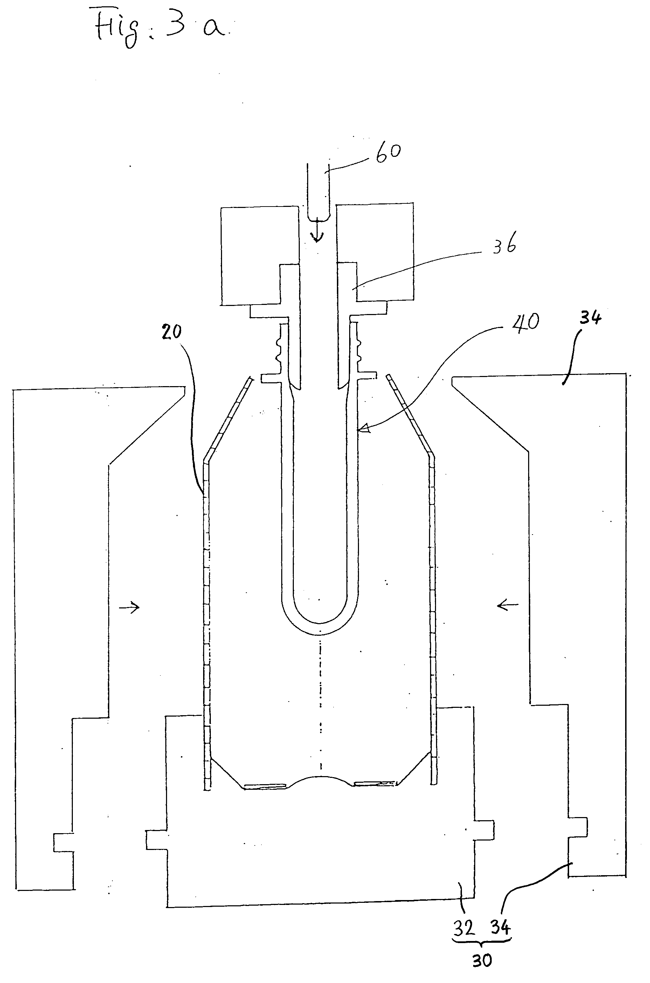

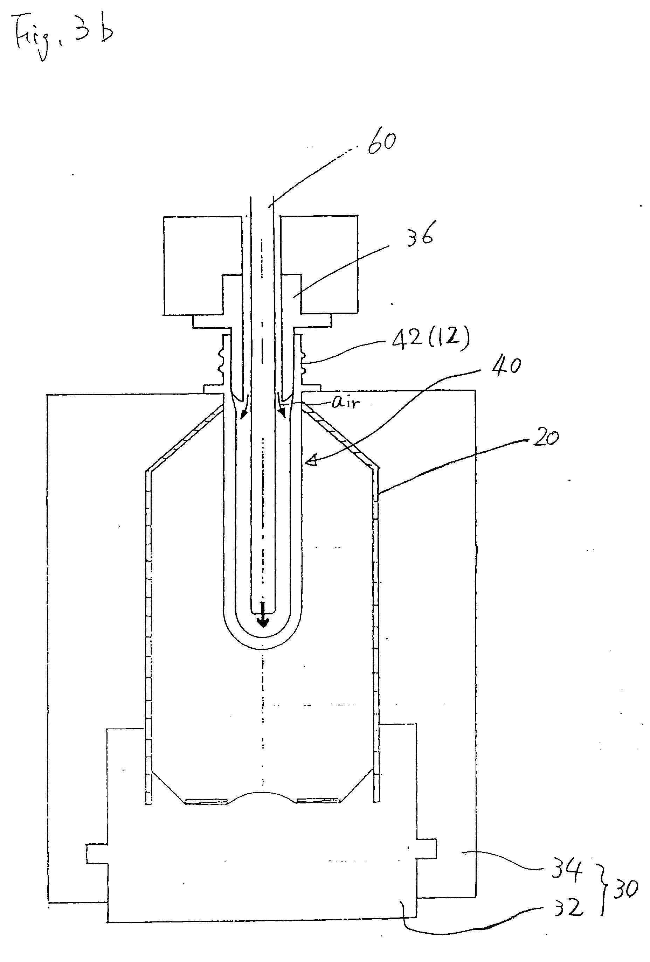

Each of Figures 3a and 3b are a sectional view which illustrates one example of a method used to manufacture the compound container of the present invention.

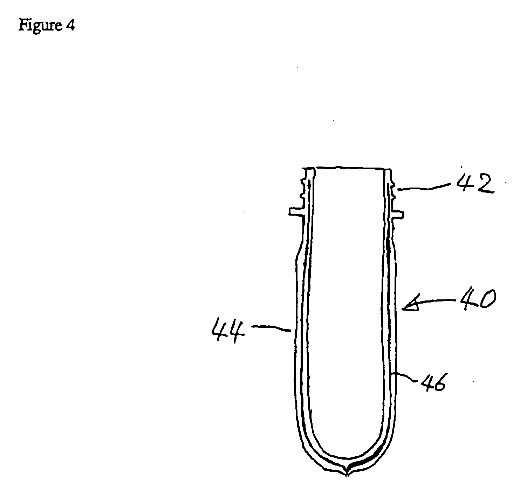

Figure 4 is a sectional view which illustrates one example of the preform of the present invention.

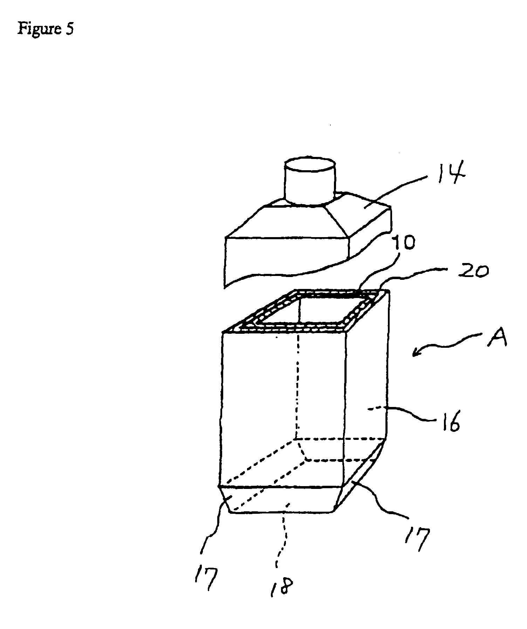

Figure 5 is a partially abbreviated perspective view of another embodiment of the compound container of the present invention.

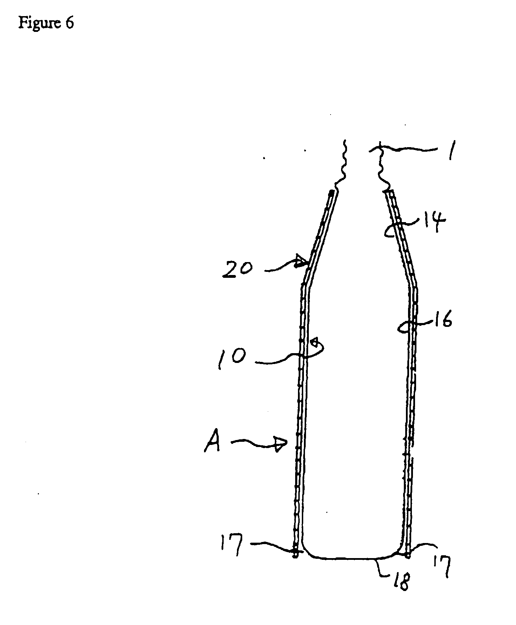

Figure 6 is a sectional view of still another embodiment of the present invention.

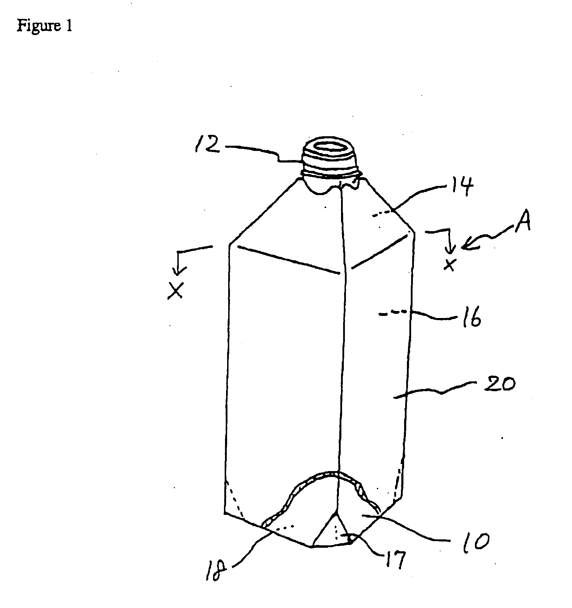

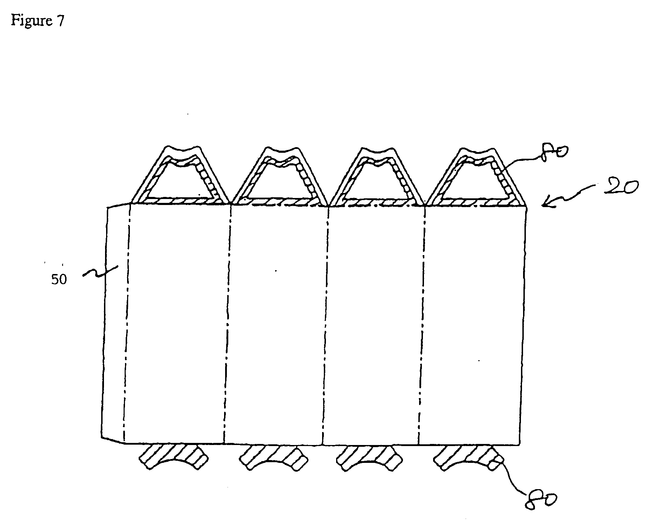

Figure 7 is a plan view which shows the blank of the outer container of the compound container shown in Figure 1.

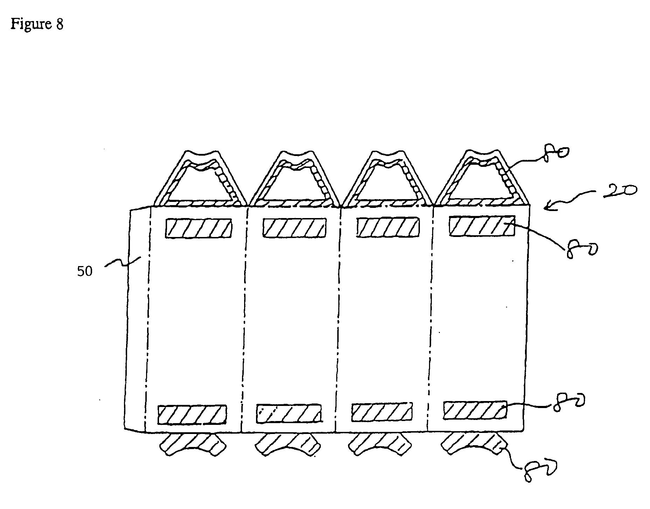

Figure 8 is a plan view which shows the blank of a comparative example.

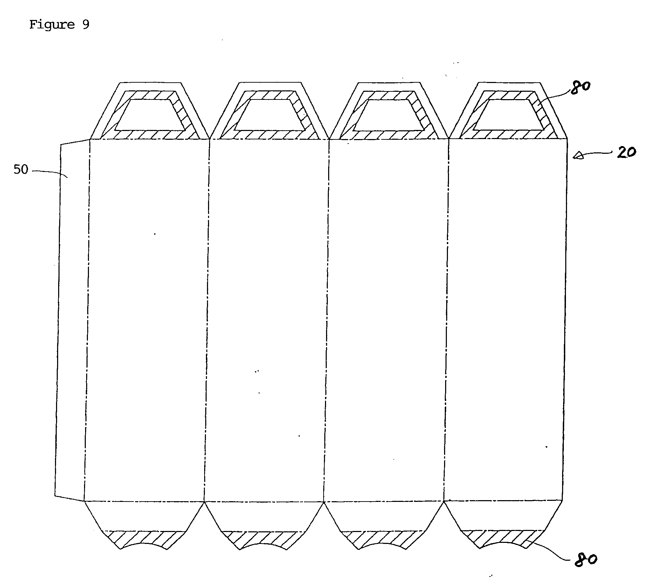

Figure 9 is a plan view which shows the blank of the outer container of the compound container shown in Figure 5.

Below, the present invention will be described in detail with reference to the attached figures.

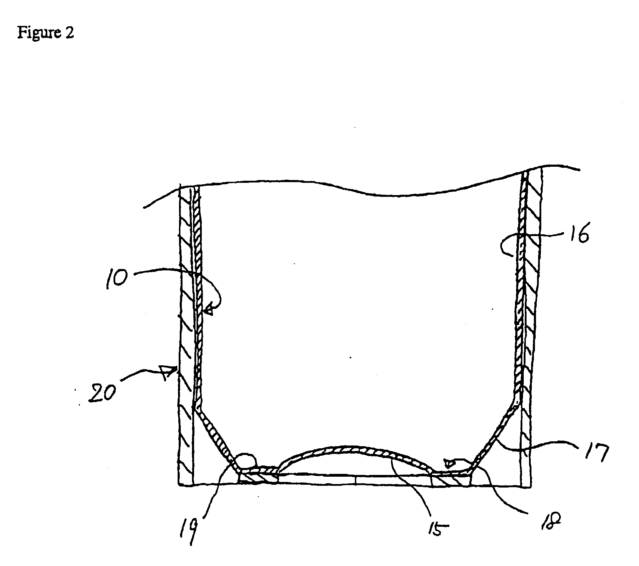

As is shown in Figures 1 and 2, a compound container A of the present invention consists of an inner container 10 which has a finish 12 formed as an opening portion, a bottom part 18 and a sleeve-form trunk part 16, and an outer container 20 which covers substantially the entire surface of at least the trunk part 16 of said inner container 10.

As is shown in Figure 3a and 3b, the inner container 10 is formed by positioning a separately fabricated plastic preform 40 inside the outer container 20 which has been set inside a metal mold 30 used for the molding of the inner container, and blowing air into this preform 40 so that said preform is stretched in the vertical direction (direction of height) and lateral direction (direction of diameter), and is thus caused to expand in conformity to the shape of the metal mold 30 so that said preform is molded into a prescribed shape. In this case, the outer container 20 and the inner container 10 are formed into an integral unit.

Furthermore, in the present invention, the abovementioned inner container 10 is characterized by the fact that at least portions of the parts connecting the lower end of the trunk part 16 and the bottom part 18 are connected via connecting walls 17 which form respective obtuse angles relative to the trunk part 16 and bottom part 18.

The inner container 10 is formed by subjecting the aforementioned preform 40 fabricated beforehand as described above to stretch blow molding, preferably biaxial stretched blow molding using a stretching assisting means such as a stretching rod or stretching plug 60, etc. The preform 40 is formed by a molding method such as injection molding, etc., prior to the abovementioned stretch blow molding.

Generally, as is shown in Figure 4, the shape of the preform 40 is roughly that of a test tube. An upper part 42 which has an opening forms the finish 12 of the inner container, while a lower part 44 is molded to form the trunk part 16 and bottom part 18 of the inner container. Furthermore, the finish 12 preferably has a threaded structure as shown in the figures. This facilitates reclosing and is desirable; however, the present invention is not limited to such a structure, and it would also be possible to use some other structure. For example, the finish 12 could also have a straight shape free of steps, in order to allow a separately fabricated hinged cover, etc. In this case, a closure for the container, in the form of a plug, could be pressure fitted into the finish of the container.

It is necessary that the size of the preform 40 be suited to the size of the inner container 10; preferably, the size of the perform 40 is approximately 0.3 to 0.95 times the size of the container following molding in the direction of height, and approximately 0.1 to 0.5 times the size of the container following molding in the direction of diameter. Furthermore, the thickness of the wall of the preform 40 must be designed so that the lower limit of the thickness when the preform is molded into a container is preferably 0.05 mm or greater. Although this value also depends on the size of the final container and the size of the abovementioned preform, a thickness of 1.5 mm to 5.0 mm is desirable.

Furthermore, as the thickness of the wall of the inner container increases, the strength of the container is increased, which is advantageous for maintaining the shape of the container. On the other hand, such an increase in thickness makes it difficult to crush the inner container when the container is discarded, so that volume reduction of waste becomes impossible, thus creating problems in waste disposal. Furthermore, since the amount of plastic used is increased, numerous problems are also created in terms of economy and conservation of petroleum resources.

In regard to these dimensions, it is desirable that the stretching ratio of the inner container 10 be 4.5 or less relative to the preform in all portions. The reason for this is as follows: i.e., in cases where the stretching ratio exceeds this value, crystallization of the stretched portions becomes excessively large, so that there is a danger of an abrupt drop in mechanical strength. As a result, there is a danger that these portions will be damaged when the container is subjected to an impact.

Furthermore, the stretching ratio expresses the ratio of the surface area of the container following molding to the surface area of the preform (this is also called the 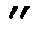 area draw ratio"). This value is ordinarily calculated as the product of the stretching ratio in the vertical direction and the stretching ratio in the lateral direction.

A plastic which is easily worked and which is superior in terms of various properties when formed into a container (e.g., strength, oxygen barrier properties and water vapor barrier properties) is selected and used as the plastic which forms the inner container 10. Concrete examples of such plastics include polyolefin resins such as polyethylenes, polypropylenes and ethylene-propylene copolymers, etc., polyester resins such as polyethylene terephthalates and polyethylene 2,6-naphthalates, etc., polystyrene resins, polyvinyl chloride resins, polycarbonate resins, polyacrylonitrile resins, and mixtures of two or more of these resins.

Among the above resins, polypropylenes and polyethylene terephthalates are especially superior in terms of ease of molding and working, properties when formed into a container, hygienic properties and cost, etc., and are therefore especially desirable for use. Furthermore, polypropylenes generally contain a slight ethylene component; in the case of polypropylene resins used in the present invention, it is desirable to use polypropylene resins which have an ethylene component of 2 wt % to 10 wt % (preferably 3 wt % to 5 wt %).

If necessary, sorbitol type or phosphorus type nucleating agents may be added to polypropylene resins for the purpose of improving the transparency of the molding. The amount added is preferably 0.1 to 0.5 parts by weight per 100 parts by weight of polypropylene resin.

If necessary, the inner container 10 can be formed with a multilayer structure. An inner container with a multilayer structure can be manufactured by forming a preform 40 with a multilayer structure. A preform with a multilayer structure can be molded by injection molding. The object of using a multilayer structure is to add special functions, e.g. oxygen barrier properties, to the inner container 10. In this case, a resin which is suited to the purpose may be selected and used. For example, the inner container 10 can be endowed with a high degree of oxygen barrier properties by laminating a resin layer 46 with high gas barrier properties (consisting of a saponified ethylene - vinyl acetate copolymer, polyacrylonitrile or polyvinyl alcohol, etc.) in the preform 40 as shown in Figure 4.

In regard to the shape of the inner container, as is shown in Figures 1 and 2, said inner container has a finish 12, a bottom part 18 and a sleeve-form trunk part 16. A desirable shape is a structure which has a shoulder part 14 that gradually increases in diameter from the finish 12 to the trunk part 16. Constructing the container in this manner results in an improvement in the buckling strength of the container. In particular, the buckling strength is further improved if the container is constructed so that the outer container 20 (described later) covers this shoulder part 14. Accordingly, such a construction is desirable.

The trunk part 16 of the inner container has a great influence on the overall shape of the compound container A. A square sleeve such as that shown in Figure 1 has a good packing efficiency and is superior in terms of adaptability; furthermore, the manufacture of the outer container 20 is also easy in such a case. Accordingly, such a shape is desirable. However, it would also be possible to form the trunk part 16 of the inner container as a cylinder, elliptical cylinder or polygonal sleeve other than a square sleeve, in accordance with design requirements.

As in universally known containers, it is desirable that the bottom part 18 of the inner container 10 has a ground-contacting part 19 which allows the container to stand on its own. As the area of this ground-contacting part 19 is increased, the self-standing properties of the container are improved (see Figure 2). In the present invention, however, the self-standing porperties of the container may be insured even if the area of the ground-contacting part is small, depending on the shape of the outer container. Furthermore, the strength of the inner container can be improved by forming the central portion 15 of the bottom part so that said central portion projects toward the interior of the container.

The inner container 10 of the present invention is characterized by the fact that at least portions of the connecting parts between the abovementioned trunk part 16 and bottom part 18, i.e., the parts where the lower end of the trunk part 16 and the peripheral part of the bottom part 18 are connected, are connected via connecting walls 17 which form respective obtuse angles relative to the trunk part and bottom part.

In cases where the trunk part 16 of the inner container is a square sleeve, it is desirable that connecting walls 17 be formed on at least the four corners of the bottom part. The reason for this is as follows: i.e., in cases where the inner container has a trunk part 16 with a square sleeve shape, the four corners of the bottom part 18 are located at the greatest distance from the original preform 40, so that the container walls stretched by blow molding are thinnest at these corners.
Accordingly, by forming connecting walls 17 in these areas, the distance from the original preform 40 is shortened, so that the thickness of the container walls can be prevented from becoming extremely thin.

It is desirable that the angle between the abovementioned connecting walls 17 and the trunk part 16 or bottom part 18 be 105 to 165 degrees (preferably 120 to 150 degrees). Construction of the connecting walls in this manner helps to prevent the concentration of impact stresses. Furthermore, the size of the connecting walls 17 is closely related to the overall size of the compound container, in the case of a 1000-ml compound container, it is desirable that the length of the connecting walls 17 in the direction of height be 3 mm or greater (preferably 5 mm or greater).

Figures 1 and 2 illustrate a configuration in which connecting walls 17 are formed on the four corners of the bottom part 18. The resulting shape is a shape with triangular pyramids cut from the four corners of the bottom part 18 of the inner container 10, which has a trunk part with the shape of a square sleeve. In this case, the connecting walls 17 are triangular, as is shown in the figures.

It would also be possible to form connecting walls 17 not just in the abovementioned four corners, but around the entire area of the connecting part between the trunk part 16 and the bottom part 18, i.e. around the entire peripheral part of the bottom of the inner container.

Figure 5 shows a container in which connecting walls 17 are formed around the entire connecting part of an inner container 10 which has a trunk part 16 with the shape of square sleeve. In the example shown in the figures, the resulting container shape is a shape in which triangular prisms are cut from the peripheral part of the bottom part 18 of the inner container (which has a trunk part 16 with the shape of a square sleeve), and the shape of the connecting walls 17 is a trapezoidal shape. In this example as well, the distance between the portions containing the four corners of the bottom part 18 of the inner container and the original preform 40 is shortened, so that thinning of the container walls can be prevented.

In cases where the trunk part 16 of the inner container has the shape of a cylinder or elliptical cylinder, connecting walls 17 may be formed on all or part of the peripheral portions of the bottom part 18, as in the examples shown in Figure 1 or Figure 5.

In all of the embodiments described above, the connecting walls 17 were formed with a flat shape; however, within limits conforming to the object of the present invention, said connecting walls 17 may also be formed with a non-flat (i.e. curved) shape. For example, as shown in Figure 6, the connecting walls 17 may be formed by curved surfaces which smoothly connect the trunk part 16 and the bottom part 18.

Since the inner container 10 is formed by stretch blow molding as described above, the shape of said inner container 10 is realized by the metal mold 30 used for stretch blow molding. In other words, an inner container 10 with the desired shape can be molded by forming the metal mold 30 used for stretch blow molding in the shape described above.

Stretch blow molding itself is a universally known technique; furthermore, biaxial stretched blow molding processes, which are desirable for the molding of the inner container 10 of the present invention, are also in themselves universally known. Ordinarily, in a biaxial stretched blow molding process, the preform 40 is forcibly stretched in the direction of height by a stretching assisting means (stretching rod) 60, and is then further stretched in the direction of heigth and in the lateral direction by the blown air, so that the preform 40 is formed into the desired container shape (see Figures 3a and 3b).

The outer container 20 of the present invention is formed from a sheet which is preferably formed principally of paper. The term "principally of paper" refers to paper used alone, or a material in which paper is the principal constituent element, and which may additionally contain other layers. The outer container 20 imparts mechanical strength to the compound container of the present invention, so that said container is endowed with shape retainability and self-standing stability.

Examples of layers which may be additionally installed on the aforementioned paper include plastic layers which are used to endow the sheet with water resistance or gas barrier properties, etc. Furthermore, printed layers may also naturally be formed on the aforementioned paper. Since paper is used, multi-color printing such as gravure printing or offset printing, etc., can easily be accomplished, so that attractive designs, etc., can be applied. Furthermore, protective layers, etc., which are used to protect such printed layers can also be formed on the paper.

In cases where the average thickness of the trunk part of the inner container has been desigend as an appropriate thickness (that is, a thickness which is equal to or greater than the required minimum thickness, but which is not excessively large), it is desirable that the paper used have a thickness which is approximately 2.5 to 10 times the average thickness of the trunk part of the inner container. In cases where a paper whose thickness is less than 2.5 times the average thickness of the trunk part of the inner container is used, shape retention, etc., of the container becomes difficult. On the other hand, in cases where a paper whose thickness is greater than 10 times the average thickness of the trunk part of the inner container is used, the strength of the container becomes excessive and the amount of waste is increased; furthermore, the use of such a thick paper is uneconomical.

In concrete terms, the abovementioned thickness is determined in relation to the capacity of the container; for example, in the case of a container with a capacity of 1000 ml, it is desirable that the thickness of the outer container 20 be approximately 0.1 mm to 0.2 mm, or approximately 200 g/m² to 500 g/m².

Furthermore, there are no particular restrictions of the type of paper used; examples of types of paper that can be used include converted papers such coated papers, art paper, board paper, coated board, manila board, white board, chip board, straw board and color board, etc., and virgin pulp converted papers such as milk-carton raw-material paper and paper-cup raw-material paper, etc.

The shape of the outer container 20 basically conforms to the shape of the inner container 10; for purposes of container shape retention, it is necessary that the outer container 20 covers substantially the entire surface of the trunk part 16 of the inner container 10. Preferably, the ground-contacting portion 19 of the bottom part 18 is also covered, and in cases where the inner container 10 has a shoulder part 14, said shoulder part 14 is covered as well. Construction of the outer container 20 in this manner insures sufficient shape retention of the compound container A (see Figures 1 and 2).

According to the example shown in Figure 5 the shoulder part 14, the connecting walls and the bottom part 18 are covered by the outer container 20. The blank for the outer container 20 has the shape shown in Figure 9.

Furthermore, it is desirable that the outer container 20 be of such a height that said outer container 20 reaches the bottom part 18 of the inner container 10. It is also possible to form the outer container 20 in a shape which reaches the bottom part 18 of the inner container 10 by conforming to a shape of the inner container 10 (as is shown in Figure 5); however, by forming the outer container 20 with a height which is such that the outer container 20 reaches the bottom part 18 of the inner container 10, and by making the shape of the sleeve-form trunk part 16 the shape that is obtained by stretching said part, as shown in Figure 2 (so that the connecting walls 17 of the inner container do not contact the outer container 20), it is possible to obtain a construction in which the lower end of the outer container 20 is positioned on the same plane as the bottom part 18 of the inner container 10, so that the apparent ground-contact area of the container is increased, thus improving the self-standing properties. The blank for this outer cotnainer has the shape shown in Figure 7.

Furthermore, it would also be possible to form a long, slender punched-out area, in the outer container 20 in the direction parallel to the direction of height of the inner container 10, thus making it possible to ascertain from the outside the amount of contents remaining in the container.

The outer container 20 can be manufactured by punching the abovementioned sheet consisting principally of paper into a prescribed shape after printed layers or adhesive agents (described later) have been applied, thus forming a blank, and then assembling this blank.

The outer container 20 is set inside the aforementioned metal mold 30 used for blow molding, and the aforementioned preform 40 is positioned inside the outer container 20; then, said preform 40 is subjected to blow molding, so that the outer container 20 and inner container 10 are formed into an integral unit (see Figures 3a and 3b).

Depending on the material of the inner container 10, integration of the outer container 20 and inner container 10 may be accomplished by means of adhesive properties possessed by the inner container 10 itself. Generally, however, this integration is accomplished by using an adhesive agent 80.

In regard to this adhesive agent 80, an emulsion type adhesive agent or pressure-sensitive adhesive agent may also be used; however, it is desirable to use a thermosetting adhesive agent or a hot-melt adhesive. Furthermore, it is desirable that this adhesive agent 80 be applied to the inside surface of the outer container 20 beforehand. The reasons for the above are as follows: i.e., thermosetting adhesive agents or hot-melt adhesives are easy to handle; in addition, since the inner container 10 is heated to a certain temperature during the molding of said inner container 10, the outer container 20 and inner container 10 can be integrated by using a thermosetting adhesive agent or a hot-melt adhesive which is caused to form a bond by this heat, without any need for an operation such as activation, etc., of the adhesive agent 80, so that the bonding operation is economical.

Examples of thermosetting adhesive agents which are desirable for use include hot-melt type adhesive agents and solvent type hot-melt adhesive agents known as "hot lacquers". In concrete terms, adhesive agents consisting principally of ethylene - vinyl acetate copolymers or olefins may be used.

Furthermore, examples of hot-melt adhesives which can be used include resins which show adhesive properties as a result of being heated, such as ethylene - α - olefin copolymers, ethylene - acrylic acid copolymers, maleic acid - grafted polypropylenes, ethylene - vinyl acetate copolymers, ionomers, ethylene - ethyl acrylate copolymers and ethylene - methacrylic acid ester copolymers, etc.

A layer of the adhesive agent 80 can be formed on the inside surface of the outer container 20 by a method such as engraved roll coating, roll coating or silk-covered screen printing, etc., or in cases where said adhesive agent is a hot-melt adhesive, by a method such as extrusion coating or lamination, etc. It is desirable that the thickness of this layer of adhesive agent 80 be approximately 0.1 to 5 microns in the case of a hot lacquer, or approximately 15 to 40 microns in the case of a hot-melt adhesive.

In cases where a hot-melt adhesive is used as the adhesive agent 80, the inside surface of the outer container 20 may be subjected to a universally known corona discharge treatment, plasma treatment or UV light treatment in order to improve the adhesion between the hot-melt adhesive and the outer container 20.

The adhesive agent 80 may also be applied to the entire surface of the outer container 20. However, a desirable configuration of the present invention is a structure in which the outer container 20 covers the shoulder part 14 and the bottom part 18 of the inner container 10, and in which the adhesive agent 80 is applied only to the portions of the outer container 20 that cover the shoulder part 14 and bottom part 18. The reason for this is as follows: i.e., since the inner container 10 shrinks following molding, external waviness (wrinkles) will be generated in the outer container 20 (which does not shrink) if the trunk part 16 of the inner container 10 is bonded to the outer container 20.

Furthermore, although the layer of adhesive agent 80 may be formed over the entire inside surface of the outer container 20, it is desirable to apply the adhesive agent 80 in the form of a pattern coating. One of the reasons for this is as follows: i.e., in cases where the adhesive agent 80 is applied over the entire surface, some of the adhesive agent 80 may be squeezed out from the outer container 20 as a result of the shrinkage of the inner container 10, thus having a deleterious effect on the external appearance of the container. Furthermore, another reason is the following: i.e., since portions of the inner container 10 that are bonded to the outer container 20 are placed under a strong constraint, impact stress is concentrated in areas where no outer container 20 is present when the container is subjected to an impact, so that the danger of damage is increased.

The pattern design used in order to avoid such problems may be any desired pattern design such as a scattered marble pattern, stripe pattern or lattice pattern, etc. Furthermore, it would also be possible to use a pattern which runs along the outline of the area of adhesive agent layer formation; in this case, it is desirable from the standpoint of avoiding the aforementioned stress concentration to leave areas in which no adhesive agent is applied for a fixed distance from the outer line of the aforementioned outline portion (see Figure 7).

Furthermore, in cases where a hot-melt adhesive is used as the adhesive agent 80, it would also be possible to limit the bondable portions by applying the hot-melt adhesive over the entire surface and then applying a stripping varnish in a pattern design.

It is ordinarily desirable that the bonding strength between the outer container 20 and the inner container 10 obtained by means of the adhesive agent 80 be as strong as possible; this bonding strength should preferably be such that a 15 mm wide strip of the bonded materials can resist at least 50 grams of force applied uniformly along the 15 mm wide edge of the strip in a direction attempting to separate the sheets. This bonding strength test is well-known to those in the field and is conventionally designated "50 gf/15 mm(width)". Preferably, the bonding strength is 100 gf/15 mm (width) or greater. If the bonding strength is weaker than this, even a slight impact will result in peeling between the outer container and inner container, so that the compound container becomes inferior in terms of utility.

Meanwhile, in order to allow easy separation of the outer container and inner container by hand at the time of container disposal, it is desirable that the bonding strength between the outer container and inner container in areas where the aforementioned adhesive agent layer is formed be 3000 gt/15 mm (width) or less (and preferably 1000 gf/15 mm (width) or less). If the bonding strength exceeds this value, the paper of the outer container 20 will fail between layers, resulting in so-called "pull-out type fracture", so that separation occurs in a state in which a portion of the paper adheres to the inner container 10. As a result, impurities will be mixed with the inner container 10 when the inner container 10 is recycled.

Furthermore, it is desirable to select the type of adhesive agent 80 used, or to select and adjust the surface treatment performed in the area where the adhesive agent layer is formed, so that the bonding strength between the outer container 20 and the adhesive agent 80 is greater than the bonding strength between the adhesive agent 80 and the inner container 10. If this is done, the adhesive agent 80 will adhere to the outer container 20 when the outer container 20 and inner container 10 are separated, so that no adhesive agent remains on the inner container 10. As a result, recycling of the inner container 10 is facilitated.

In cases where the inner container 10 and outer container 20 are to be made separable, removal of the outer container 20 from the compound container A can be facilitated by forming a single line of perforations or two closely spaced parallel lines of perforations, known as 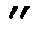 zippers" in the outer container 20.

### Practical Example 1

A coated board (310 g/m², thickness: 0.35 mm) was coated with an ethylene-vinyl acetate copolymer type hot-melt lacquer as an adhesive agent (amount of coating: approximately 2 g/m²) by means of an engraved roll coater in the pattern shown in Figure 7. Afterward, this board was punched out in the shape shown in Figure 7 by means of a punching machine and assembled by applying glue to a gluing tab 50 connected by gluing, thus producing an outer container 20 with a height of approximately 280 mm, which had the shape of a square sleeve in which the length of one side was 68.5 mm.

Meanwhile, a preform 40 which had the shape of a test tube was prepared by injection-molding a polyethylene terephthalate resin. The preform 40 had a diameter of approximately 30 mm, a height of approximately 90 mm, and a wall thickness of approximately 2 mm.

Then, the outer container 20 was set on a bottom mold 32 of a mold 30 used for the molding of the inner container, and a preform 20 which is set on a mandrel 36 was heated appropriately, whereby the preform 40 was softened. Next, the bottom mold 32 was moved upper in the Figure, whereby the preform 40 was set inside the outer container 20 (see Figure 3a). Then, a pair of blow molds 34 was moved in the direction of the arrow shown in Figure 3a, whereby the blow molds 34 was closed. The preform 40 was stretched by moving a stretching rod 60 down, and air was blown in (see Figure 3b) so that the preform 40 was caused to expand to the shape of the mold 30. As a result, an inner container 10 with an internal capacity of 1000 ml was formed, and this inner container 10 was integrated with the outer container 20, thus producing a compound container constructed according to the present invention as is shown in Figure 1.
Here, the abovementioned bottom mold 32 was worked so that the shape of the inner container 10 was a shape in which triangular pyramids with a height of 20 mm were cut from the four corners of the bottom part 18 of said inner container 10, thus forming connecting walls 17 on said four corners.

The average wall thickness of the trunk part of the inner container thus obtained was approximately 0.2 mm, and the average wall thickness of the connecting parts at the four corners was approximately 0.1 mm. Moreover, the stretching ratio of the connecting wall was approximately 20.

When 30 of these compound containers were manufactured and checked for the presence or absence of pin-holes in the inner container, absolutely no pin-holes were found. Furthermore, 10 of the compound containers thus obtained were filled with 1000 ml of water each, and were stored for 12 hours at 5°C; afterward, the containers were allowed to fall freely onto a concrete surface 10 times from a height of 1 m, and the number of containers showing cracking was checked. As a result, none of the containers showed any cracking, thus confirming that the compound container of the present invention is superior in terms of falling impact strength.

### Comparative Example 1

By changing a bottom mold, Comparative Example 1 was manufactured in the same manner as Practical Example 1, except that connecting parts were not formed on the four corners of the inner container, and the outer container was shaped so that said outer container did not cover the bottom part of the inner container. The average wall thickness of this compound container at the four corners was extremely thin, i.e., approximately 0.05 mm. Moreover the stretching ratio of the corner was approximately 40. Furthermore, in regard to the generation of pin-holes at the four corners, 5 out of 30 samples showed such pin-holes. Moreover, in the abovementioned dropping test performed using water-filled containers, 2 out of 10 samples showed cracking.

### Practical Example 2

A coated board (310 g/m², thickness: 0.35 mm (average)) which was extrusion coated with polyethylene (thickness: 25 microns) on the surface forming the inside surface was used as the sheet of the outer container. This sheet was coated with an ethylene-vinyl acetate copolymer type hot-melt lacquer as an adhesive agent (amount of coating: approximately 2 g/m²) by means of an engraved roll coater in the shaded areas shown in Figure 7. Afterward, this board was punched out by means of a punching machine and assembled by applying glue to a gluing tab 50 connected by gluing, thus producing an outer container with a height of approximately 220 mm, which had the shape of a square sleeve in which the length of one side was 68.5 mm.

Meanwhile, a preform which had the shape of a test tube was prepared by injection-molding a polyethylene terephthalate resin. This perform had a diameter of approximately 25 mm, a height of approximately 98 mm, and a wall thickness of approximately 2.8 mm.

Using the abovementioned outer container and preform, a compound container with an internal capacity of 800 ml constructed according to the present invention was manufactured in the same manner as in Practical Example 1. The average wall thickness of the trunk part of the inner container was 0.2 mm, and the wall thickness of the connecting parts at the four corners was approximately 0.1 mm, so that there was no danger of pin-holes or damage.

### Comparative Example 2

Comparative Example 2 was manufactured in the same manner as Practical Example 2, except that the adhesive agent applied to the outer container was applied in the pattern shown in Figure 8. This compound container did not show any occurrence of pin-holes; however, external waviness appeared in the outer container as a result of shrinkage of the inner container, so that the external appearance of the container was inferior. Further, the stretching ratio of the corner was approximately 28.

### Practical Example 3

A compound container constructed according to the present invention (Practical Example 3) was produced by repeating Practical Example 1, except that the material of the preform was changed to polypropylene. When the compound container thus obtained was evaluated as in Practical Example 1, no occurrence of pin-holes was seen in the inner container; furthermore, the number of samples damaged in the dropping test was zero samples.

### Comparative Example 3

Comparative Example 3 was produced by repeating Comparative Example 1, except that the material of the preform was changed to polypropylene. When the compound container thus obtained was evaluated as in Practical Example 1, no occurrence of pin-holes was seen in the inner container; however, when a dropping test was performed, 25 out of 30 samples showed cracking.

### Practical Example 4

A compound container constructed according to the present invention (Practical Example 4) was produced by repeating Practical Example 2, except that the material of the preform was changed to polypropylene.

A compound container having connecting walls with a height of 20 mm at the bottom part 18 of the inner container 10 (as is shown in Figure 5) constructed according to the present invention (Practical Example 5) was produced by using a preform which was used in Practical Example 1. The outer container 20 was formed by using a blank as is shown in Figure 9.

The average wall thickness of the trunk part of the inner container thus obtained was approximately 0.2 mm, and the average wall thickness of the connecting walls was approximately 1.5 mm. Moreover, the stretching ratio of an end part of the connecting wall was approximately 13.

When the compound container thus obtained was evaluated as in Practical Example 1, no occurrence of pin-holes was seen in the inner container; furthermore, the number of samples damaged in the dropping test was zero samples.
The compound container of the present invention is a compound container for accomodating liquids or powders, etc., which is preferably made from an outer container made of paper or a sheet whose main constituent element is paper, and an inner container preferably made of plastic which is laminated inside said outer container as an integral part of said outer container. The aforementioned inner container has an opening portion, a shoulder part, a sleeve-form trunk part and a bottom part, and connecting walls which form obtuse angles with respect to the trunk part and bottom part are formed on the peripheral portions of the bottom part. The paper outer container which covers substantially the entire surface of the trunk part of the inner container is integrated with the inner container on the outside surface side of said inner container by means of a thermosetting adhesive or hot-melt adhesive. This integration is accomplished by setting the outer container inside a metal mold using for molding, and stretch-blow-molding the inner container from a preform inside said outer container. Alternatively, the connecting walls may be curved so that they make a rounded connection between the trunk and bottom parts.

## Claims

1. A compound container comprising an inner container (10) possessing an opening portion (12), a bottom part (18) and a sleeve-form trunk part (16), and an outer container (20) which is integrated with this inner container on the outside surface side of said inner container, and which covers substantially the entire surface of at least the trunk part of said inner container, in which said inner container (10) is expanded and formed in conformity to the shape of a metal mold (30), and at the same time integrated with the aforementioned outer container (20), by blowing air into a preform (40) which is positioned inside the outer container (20) after said outer container has been placed inside the aforementioned metal mold, so that said preform (40) is stretched in the direction of height and in the direction of diameter, and in which at least portions of the connecting parts between the lower end of the trunk (16) and the bottom part (18) of the aforementioned inner container (10) are connected via connecting walls (17) which form respective obtuse angles with respect to said trunk part (16) and bottom part (18).

2. A compound container according to claim 1, wherein the trunk part (16) has the shape of a square sleeve.

3. A compound container according to claim 2, wherein said connecting walls (17) are formed on the four corners of said bottom part (18).

4. A compound container according to claim 2, wherein said container has connecting walls (17) formed by cutting triangular pyramids from the four corners of said bottom part (18).

5. A compound container according to claim 1, wherein said connecting walls (17) are formed by curved surfaces.

6. A compound container according to claim 1, wherein said connecting walls (17) are formed around the entire periphery of said bottom part (18).

7. A compound container according to claim 1, wherein said inner container (10) has a shoulder part (14) in which the diameter of the container gradually increases from said opening portion (12) to the trunk part (16) of said container.

8. A compound container according to claim 7, wherein said outer container (20) covers the shoulder part (14) of the inner container.

9. A compound container according to claim 1, wherein said inner container (10) has a multi-layer structure which includes a resin layer that is superior in terms of oxygen barrier properties.

10. A compound container according to claim 1, wherein said inner container (10) is formed by a biaxial stretched blow molding process.

11. A compound container according to claim 1, wherein said inner container (10) has a stretching ratio of 30 times or less in all portions of said container.

12. A compound container according to claim 1, wherein said outer container (20) is formed from a sheet which consists principally of paper.

13. A compound container according to claim 12, wherein said outer container (20) is a multi-layer sheet.

14. A compound container according to claim 12, wherein the thickness of said outer container (20) is 2.5 to 10 times the thickness of the trunk part (16) of said inner container (10).

15. A compound container according to claim 1, wherein said outer container (20) covers at least a portion of the bottom part (18) of said inner container (10).

16. A compound container according to claim 1, wherein a long, slender punched-out area which is parallel to the direction of height of the inner container (10) is formed in the trunk part of said outer container (20).

17. A compound container according to claim 1, wherein said outer container (20) and inner container (10) are joined by means of an adhesive agent (80) which is applied beforehand to the inside surface of the outer container, and which shows adhesive properties when heated.

18. A compound container according to claim 17, wherein said adhesive agent (80) is not applied to the trunk part of said outer container (20).

19. A compound container according to claim 17, wherein the bonding strength between the outer container (20) and the adhesive agent (80) is greater than the bonding strength between the adhesive agent (80) and the inner container (10).

20. A compound container according to claim 17, wherein said adhesive agent is applied in the form of a pattern within the area in which a layer of said adhesive agent is formed.
